# FASCICULE DE BREVET EUROPEEN

(11) **EP 1 760 399 B1**
(45) Date de publication et mention de la délivrance du brevet: **26.03.2008**
(21) Numéro de dépôt: 06017692.2
(22) Date de dépôt: 25.08.2006
(51) Int. Cl.: F23G 7/10

(54) **Procédé et brûleur spécifique pour la conversion de biomasses en flux gazeux caloporteur**
Verfahren und Brenner zur Umwandlung von Biomasse in einen Heissgasstrom
Method and burner for the conversion of biomass into a hot gas stream

(30) Priorité: 31.08.2005 FR 0508947
(43) Date de publication de la demande: 07.03.2007
(73) Titulaire: de Bussy, Jacques, Bussy les Poix 80290 (FR)
(72) Inventeur: de Bussy, Jacques, Bussy les Poix 80290 (FR)

(56) Documents cités:
- EP-A- 1 571 393
- WO-A-02/084174
- FR-A- 2 743 869
- US-A- 4 384 534
- US-A1- 2003 007 922

## Description

Le brûleur objet de la présente invention est conçu pour réaliser la conversion thermique à haut rendement de biomasses en un flux caloporteur destiné à alimenter en énergie calorifique un ou plusieurs générateurs juxtaposés. Il est de volume restreint et de grande simplicité. Son fonctionnement n'engendre que fort peu de pertes calorifiques.

Ce brûleur est particulièrement destiné à consommer des combustibles pauvres en potentiel calorifique et en particulier la biomasse, dont fait partie le bois, qui au moment de la récolte contient environ 45% d'eau. Il représente alors un pouvoir calorifique voisin de 2100 Kcal/Kg.

Le présent procédé permet la conversion de tels combustibles. L'eau incluse dans la biomasse joue d'ailleurs des rôles déterminants dans le processus :
- l'endothermie provoquée par sa mise en évaporation,
- l'importance de l'expansion affectant la vapeur aux températures élevées,
- sa partielle décomposition intervenant à partir de 800°C qui, libérant une partie de ses constituants, intervient pour craquer les molécules les plus stables apparaissant lors de la combustion de la biomasse,
- les possibles restitutions des énergies engagées, notamment lors de sa mise en évaporation initiale ; de son augmentation de température au cours du processus ; et de sa partielle décomposition.

Pour le présent exposé, l'exemple choisi concerne le bois. Il est convertible dès sa récolte et il pourra être approvisionné en flux tendu à partir des ressources situées à proximité du brûleur en exploitation. Ce bois devra être préalablement fragmenté par déchiquetage, afin de le présenter dans les conditions requises pour réaliser l'alimentation en continu du brûleur.

La présente invention utilise, comme antériorisé, l'échangeur de température, et lui seul faisant partie intégrante de la « grille-échangeur » décrite dans la seconde revendication du brevet français 0402298 du même auteur. Ledit échangeur est constitué d'un assemblage de hautes cloisons parallèles régulièrement espacées les unes des autres afin de former autant de cellules intercalaires indépendantes ouvertes à leurs extrémités hautes et basses, cellules parcourues par les produits issus de la combustion tandis que ces cloisons formant autant d'éléments dudit échangeur sont percées dans leur épaisseur de forages empruntés par l'air de combustion s'écoulant à contre-courant desdits produits afin d'être ainsi portés à haute température.
Rappelons que selon ce brevet antérieur le foyer équipé de cette grille-échangeur fonctionne à flamme inversée et qu'en outre celle-ci constitue le support du lit de combustion qu'active, par le dessous, le comburant préchauffé pulsé sous les braises reposant sur ladite grille. Ces dernières dispositions ainsi rappelées ne sont pas appliquées dans l'invention objet du présent exposé.

D'autres exemples de procédés et de foyers pour brûler de la biomasse sont donnés dans les documents WO 02084174 A, US 4384534 A, FR 2 743 869.

Le procédé selon l'invention établit un brûleur dont le foyer est constitué de deux éléments essentiels : un lit de combustion de faible épaisseur reposant sur le combustible lui-même, lit consommable entretenu et maintenu en position fixe du fait de son approvisionnement sous-jacent continu et à vitesse réglée, et un échangeur comportant des cloisons verticales régulièrement espacées dont les bases forment une surface plane, cloisons comportant ménagées dans leur épaisseur, de nombreux canaux débouchant à partir de ladite surface, l'invention étant caractérisée en ce que le front formant la surface en activité du lit de combustion et celle constituée, face à celui-ci, par la base active de la voûte échangeur émettrice des nombreux jets sous pression de comburant portés à température élevée, sont maintenues sensiblement parallèles, en vis-à-vis et à distance contrôlée l'une de l'autre, ces dispositions constituant le foyer du brûleur dont l'atmosphère interne est maintenu en dépression de sorte que la totalité des produits issus de la combustion, les cendres y compris extraites dudit lit dès leur formation par les gaz brûlés eux-mêmes, traversent de bas en haut les cellules intercalaires de la voûte échangeur transférant une partie de leur énergie aux dites cloisons avant de former le flux caloporteur, objet de l'invention, tandis qu'à contre-courant, empruntant les nombreux canaux inclus dans lesdites cloisons, le comburant fortement préchauffé est pulsé sous pression contre la surface du lit de combustion afin de provoquer et entretenir sa combustion.

La chambre de combustion du brûleur est donc constituée du volume engendré par l'espace séparant lesdites surfaces et de ceux constituant les cellules intercalaires entre cloisons.

Afin d'obtenir une température de combustion homogène sur toute la surface active du brûleur, la présente invention est encore caractérisée en ce que son alimentation est effectuée à partir d'un apport constitué des fragments de combustible, apport établi en continu et préformé de section sensiblement identique à celle de la surface active de la voûte échangeur vers laquelle il se dirige frontalement de telle sorte que le passé thermique subi, avant leur mise en combustion, par chacun des éléments constituant ladite nappe soit identique.

Une telle disposition résultera par exemple d'une alimentation effectuée « en source », c'est à dire établie verticalement de bas en haut et dirigeant son front vers la face active horizontale et tournée vers le bas de la voûte-échangeur. Cette disposition étant particulièrement retenue lorsqu'il s'agira de combustibles biomasse d'écoulement facile et possédant une caractéristique « talus d'éboulement » importante. Exemple : les graines, les noyaux de fruits ou encore les granulés.

Pour les combustibles d'écoulement plus difficile, tel que le bois en plaquettes, l'alimentation se fera par exemple en préparant l'apport de combustible sur le tapis métallique d'un convoyeur, apport préformé de section correspondante à celle de la face active de la voûte-échangeur, laquelle étant positionnée parallèlement à la dite surface et donc perpendiculairement au sens d'avancement du dit apport.

Enfin pour les matières à fibres longues, elles seront conduites au brûleur une fois compactées aux dimensions requises et en continu, afin de former le dit apport.
A débit constant du comburant amené au brûleur, et dans les limites admises pour son bon fonctionnement, l'action sur la distance séparant lesdites surfaces actives résultent du réglage de la vitesse d'acheminement du combustible vers ledit brûleur. Cette distance influence le rendement et la qualité de la combustion.

L'épaisseur du lit de combustion formant front est relativement faible (quelques centimètres). Elle dépend notamment de l'action endothermique, due à l'évaporation de la quantité d'eau contenue dans la biomasse utilisée. Cette endothermie, par son action, limite vers le bas l'extension de la zone en ignition.

Les cendres, dès leur formation, sont entraînées par aspiration hors du lit de combustion par les gaz brûlés et aussi par la vapeur d'eau en expansion émise initialement par le combustible sous-jacent à l'approche du foyer. Elles seront par la suite et en dehors du brûleur éliminées à partir du générateur thermique selon les moyens connus des constructeurs, à savoir : décélération du flux porteur due à l'ampleur des volumes traversés combinée avec les abaissements de sa température, cyclones, et enfin, la propreté des gaz brûlés le permettant, la condensation de la vapeur d'eau laquelle peut finalement être employée pour l'élimination des plus fines.

Selon les dispositions retenues pour les précédentes caractéristiques, l'invention est enfin caractérisée en ce que les cloisons de la voûte-échangeur qui sont soumises à des conditions de température sévères, sont établies à partir d'oxydes céramiques réfractaires possédant de bonnes tenues pyroscopique et chimique, un faible coefficient de dilatation et une bonne résistance aux chocs thermiques. Parmi ceux-ci figure en premier lieu l'alumine. Pour la commodité d'exécution desdites cloisons, on la trouve notamment, à très haut pourcentage, sous la forme de béton.

La puissance nominative des brûleurs établie selon l'invention dépend essentiellement de la surface active des « voûtes-échangeurs » utilisées, elle se situe aux environs de 10 kw/h par dm2.

Afin d'éviter la formation de fumées lors de la mise en fonction du brûleur, celle-ci sera réalisée en utilisant comme combustible du charbon de bois dont le rôle sera limité à porter les éléments de la voûte-échangeur à la température de fonctionnement requise.

Deux planches sont annexées au présent exposé.

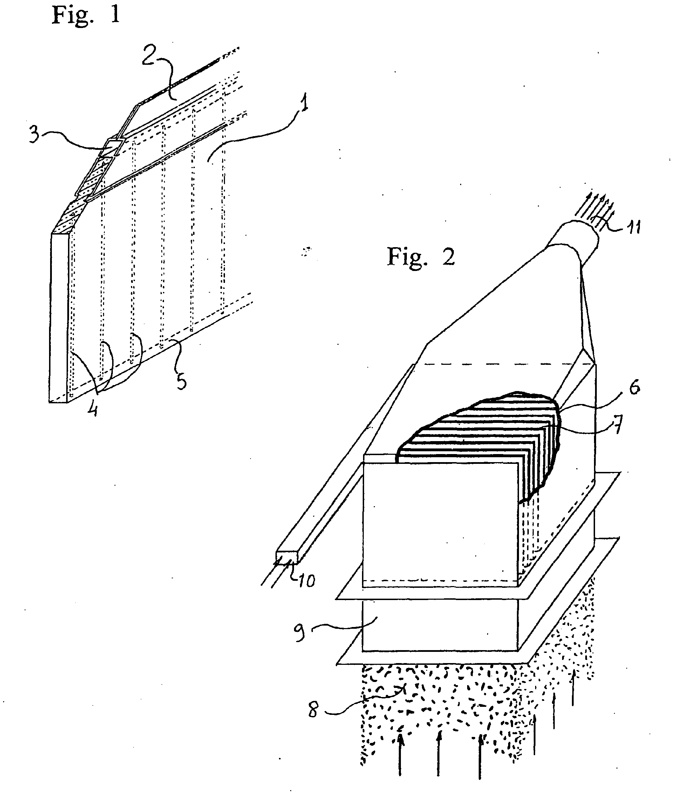

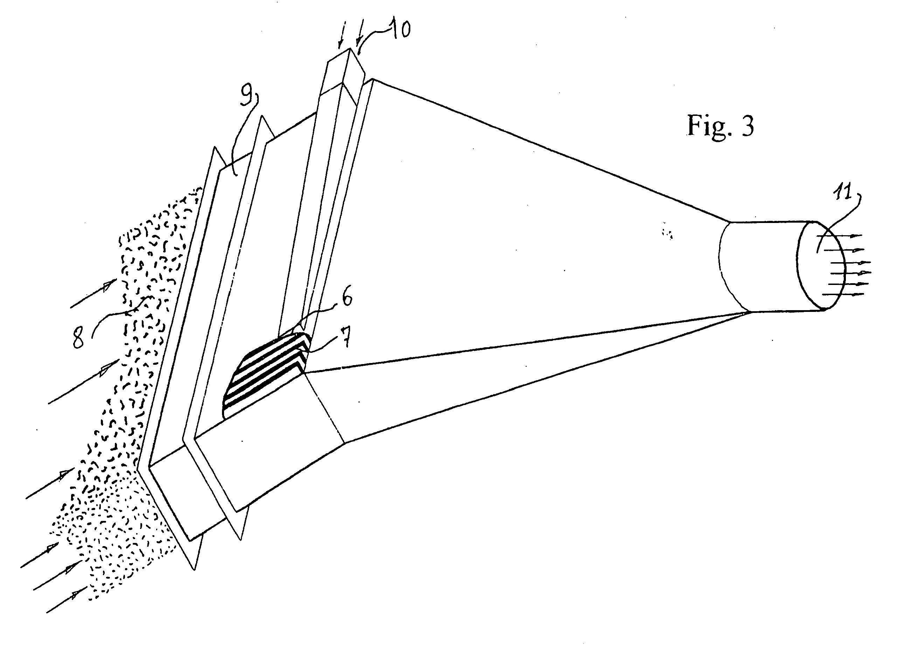

La planche I Fig 1 représente une des cloisons constituant la voûte-échangeur qui entre dans la conception du brûleur.

La Fig. 2 de la planche I ainsi que la planche II représentent les éléments constitutifs de deux brûleurs selon l'invention mais utilisés dans des positions différentes : l'une verticale est destinée à la mise en ignition de combustibles possédant un « talus d'éboulement » bien déterminé (graines et granulés) pour lesquels l'alimentation doit être exécutée verticalement « en source » ; l'autre, en position inclinée serait plus adaptée pour des combustibles n'ayant pas tendance à former de talus d'éboulement ce qui est le cas des « plaquettes » obtenues à partir du bois déchiqueté.

Les deux types d'alimentation, mettant en oeuvre des moyens de manutention fort différents, ont pour but l'approvisionnement en continu et à allure réglée exécutée en « poussant » le combustible fragmenté sous la forme d'un apport de section correspondante à celle de la face active de la voûte-échangeur.

Il s'agit de techniques spécifiques concernant la « manutention »

Les dessins annexés se limitent à schématiser l'apport en question.
N.B. Les deux brûleurs schématisés sont représentés sans l'indispensable isolation qui devra les envelopper.

La planche 1 Fig.1 représente un exemple de cloison composant la voûte-échangeur.
1. La cloison elle-même exécutée en matériau céramique réfractaire.
2. Un mode d'ancrage de la cloison utilisé dans le dispositif formant l'échangeur
3. Le conduit d'amenée du comburant frais.
4. Les multiples canaux de petits diamètres dans lesquels s'opère l'échange de température destiné à élever fortement la température du comburant qui les emprunte.
5. La rive active de la cloison, à partir de laquelle est pulsé sous pression le comburant préchauffé, rive contre laquelle se heurte à la plus haute température les produits issus de la combustion avant qu'ils ne transfèrent entre les dites cloisons. Les rives des cloisons assemblées à l'intérieur de l'échangeur forment une surface plane qualifiée dans le texte de « surface active »
   N.B. Les repaires ci-dessous sont communs aux deux variantes d'application du brûleur objet de l'invention : Planche I Fig.2 et Planche II.
6. Une coupe partielle laisse entrevoir les cloisons 7. de la voûte-échangeur.
8. L'apport de combustible poussé vers la voûte-échangeur.
9. Le cadre métallique associé à la voûte-échangeur. Cadre à l'intérieur duquel s'établit le lit de combustion formant le front parallèle et distant de la face active de la voûte.
   N.B. Pour les utilisations mettant en oeuvre le brûleur en position inclinée, voir Planche II, utilisations destinées à brûler des combustibles contenant des corps étrangers lourds, la base du cadre métallique 9 sera conçu de façon amovible. Celle-ci sera actionnée périodiquement pour permettre leur élimination.
10. L'alimentation en air frais de l'échangeur.
11. Le flux colporteur des produits issus de la combustion, flux dirigé vers le générateur thermique juxtaposé (non représenté) par l'intermédiaire duquel est établi la dépression se propageant jusqu'au foyer du brûleur.

## Revendications

1. - Procédé de combustion rehaussant la température de combustion du combustible pauvre représenté par la biomasse contenant environ 45 % d'eau et dont le pouvoir calorifique est voisin de 2100 Kcal/Kg, combustible approvisionné en source, c'est à dire de bas en haut pour former à son sommet une surface sur laquelle s'établit et se maintient à hauteur constante du fait de l'ignition du combustible, un lit de combustion, **caractérisé en ce que** l'ignition qui se produit dans le dit lit résulte de l'emploi du comburant , c.-à-d. l' air de combustion, préalablement porté, à cette fin, aux environs de 800°C avant qu'il ne soit pulsé de haut en bas à partir de multiples injecteurs, contre la surface du dit lit.

2. - Brûleur pour la mise en oeuvre du procédé selon la revendication 1, dont le foyer est constitué de deux éléments essentiels : un lit de combustion de faible épaisseur reposant sur le combustible lui-même, lit consommable entretenu et maintenu en position fixe du fait de son approvisionnement sous-jacent continu et à vitesse réglée, et un échangeur de température comportant des cloisons verticales (1) régulièrement espacées dont les bases (5) forment une surface plane, cloisons comportant ménagées dans leur épaisseur, de nombreux canaux (4) débouchant à partir de ladite surface, brûleur **caractérisé en ce que** le front formant la surface en activité du lit de combustion et celle constituée, face à celui-ci, par la base active (5) de la voûte échangeur émettrice des nombreux jets sous pression de comburant (10) portés à température élevée, sont maintenues sensiblement parallèles, en vis à vis et à distance contrôlée l'un de l'autre, ces dispositions constituant le foyer du brûleur dont l'atmosphère interne est maintenue en dépression de sorte que la totalité des produits issus de la combustion (11), les cendres y compris extraites dudit lit dès leur formation par les gaz brûlés eux-mêmes, traversent de bas en haut les cellules intercalaires de la voûte échangeur transférant une partie de leur énergie aux dites cloisons (7) avant de former le flux caloporteur (11), tandis qu'à contre courant, empruntant les nombreux canaux (4) inclus dans lesdites cloisons (1), le comburant (10) préchauffé est pulsé sous pression contre la surface du lit de combustion afin de provoquer et entretenir sa combustion.

3. - Brûleur selon la revendication 2, **caractérisé en ce que** afin d'obtenir une température de combustion homogène sur toute la surface active du brûleur, son alimentation est effectuée à partir d'un apport constitué de fragments de combustible (8), apport établi en continu préformé de section sensiblement identique à celle de la surface active (5) de la voûte-échangeur vers laquelle il se dirige frontalement de telle sorte que le passé thermique subi, avant leur mise en combustion, par chacun des éléments constituant ladite nappe soit identique.

4. - Brûleur selon les revendications 2 et 3, **caractérisé en ce que** les cloisons (1) de la voûte-échangeur qui sont soumises à des conditions de température sévères, sont établies à partir d'oxydes céramiques réfractaires possédant de bonnes tenues pyroscopique et chimique, un faible coefficient de dilatation et une bonne résistance aux chocs thermiques, parmi ceux-ci figure en premier lieu l'alumine.

## Claims

1. - A combustion method raising the combustion temperature of the lean fuel represented by the biomass containing about 45% of water and the heating value of which is close to 2,100 kcal/kg, a source-supplied fuel, i.e. from bottom to top in order to form on its top a surface on which a combustion bed is established and kept at constant height because of ignition of the fuel, **characterized in that** the ignition which occurs in said bed, results from the use of an oxidizer (combustion air) brought beforehand to around 800°C for this purpose, before it is pulsed from top to bottom from multiple injectors against the surface of said bed.

2. - A burner for applying the method according to claim 1, the hearth of which consists of two essential components: a combustion bed of small thickness lying over the actual fuel, a consumable bed sustained and maintained in a fixed position owing to its continuous underlying supply at a controlled rate, and a temperature exchanger including vertical partitions (1) regularly spaced out, the bases (5) of which form a planar surface, partitions which include, provided in their thickness, many channels (4) opening out from said surface, a burner **characterized in that** the front forming the active surface of the combustion bed and the one facing the latter, formed by the active base (5) of the exchanger vault emitting many pressurized oxidizer (10) jets brought to a high temperature, are kept substantially parallel, facing each other and at a controlled distance from each other, these arrangements forming the hearth of the burner, the internal atmosphere of which is kept depressurized so that the totality of the products from the combustion (11), including the ashes extracted from said bed, as soon as they are formed by the actual burnt gases, passes from bottom to top through the intermediate cells of the exchanger vault transferring part of their energy to said partitions (7) in order to form the heat transfer flow (11), while following the numerous channels (4) included in said partitions (1) under counter-current conditions, the preheated oxidizer (10) is pulsed under pressure against the surface of the combustion bed in order to cause and sustain its combustion.

3. - The burner according to claim 2, **characterized in that**, in order to obtain a homogenous combustion temperature over the whole active surface of the burner, its supply is carried out from a feed consisting of fuel fragments (8), a preformed feed established continuously with a section substantially identical to that of the active surface (5) of the exchanger vault towards which it is frontally directed so that the thermal history undergone before their combustion by each of the components forming said layer, is the same.

4. - The burner according to claims 2 and 3, **characterized in that** the partitions (1) of the exchanger vault which are subject to severe temperature conditions, are established from refractory ceramic oxides having good pyroscopic and chemical resistances, a low expansion coefficient and good thermal shock resistance, where among the latter alumina appears in the first place.

## Patentansprüche

1. Verbrennungsverfahren, das die Verbrennungstemperatur des niederkalorischen Brennstoffs, der durch die Biomasse repräsentiert wird, die zirka 45 % Wasser enthält und deren Brennwert bei 2100 kcal/kg liegt, erhöht, wobei der Brennstoff quellenversorgt wird, das heißt von unten nach oben, um auf seinem Scheitel eine Oberfläche zu bilden, auf der sich aufgrund der Zündung des Brennstoffs ein Verbrennungsbett ausbildet und in konstanter Höhe aufrechterhalten wird, **dadurch gekennzeichnet, dass** die im besagten Bett stattfindende Zündung auf die Verwendung eines Brandförderers (Verbrennungsluft) zurückzuführen ist, der zuvor zu diesem Zweck auf zirka 800 °C gebracht wurde, bevor er aus einer Vielzahl von Düsen von oben nach unten gegen die Oberfläche des besagten Betts gepulst wird.

2. Brenner zur Umsetzung des Verfahrens nach Anspruch 1, dessen Feuerraum von zwei wesentlichen Elementen gebildet wird: einem Verbrennungsbett geringer Dicke, das auf dem Brennstoff an sich ruht, wobei das Brennstoffbett aufgrund seiner kontinuierlichen und mit regulierter Geschwindigkeit erfolgender Versorgung von unten unterhalten und in feststehender Position gehalten wird, und einem Wärmetauscher, der vertikale, regelmäßig beabstandete Trennwände (1) aufweist, deren Basis (5) eine ebene Fläche bilden, wobei die Trennwände zahlreiche, in ihre Dicke eingearbeitete Kanäle (4) aufweisen, die ab der besagten Fläche münden, wobei der Brenner **dadurch gekennzeichnet ist**, das die Front, die die aktive Oberfläche des Verbrennungsbetts bildet und die Oberfläche, die ihm gegenüber von der aktiven Basis (5) des Wärmetauschergewölbes, von dem zahlreiche Brandförderer-Druckstrahlen (10) ausgehen, die auf hohe Temperatur gebracht wurden, gebildet wird, etwa parallel gegenüber und in kontrolliertem Abstand zueinander gehalten werden, wobei diese Anordnungen den Feuerraum des Brenners bilden, dessen interne Atmosphäre in Unterdruck gehalten wird, so dass die Verbrennungsprodukte (11) insgesamt, die Aschen inkl. Auszüge aus dem besagten Bett ab ihrer Bildung durch die verbrannten Gase an sich, die interkalären Zellen des Wärmetauschergewölbes von unten nach oben durchqueren, wobei sie einen Teil ihrer Energie an die besagten Trennwände (7) übertragen, bevor sie den Wärmeträgerstrom (11) bilden, währenddessen der vorgewärmte Brandförderer (10) im Gegenstrom durch die zahlreichen, in die besagten Trennwände (1) eingearbeiteten Kanäle unter Druck gegen die Oberfläche des Verbrennungsbetts gepulst wird, um seine Verbrennung auszulösen und aufrechtzuerhalten.

3. Brenner nach Anspruch 2, **dadurch gekennzeichnet, dass**, um eine gleichmäßige Verbrennungstemperatur auf der gesamten aktiven Oberfläche des Brenners zu erhalten, seine Versorgung durch eine Zufuhr erfolgt, die von Brennstofffragmenten (8) gebildet wird, wobei diese Zufuhr als kontinuierlich vorgeformter Abschnitt erfolgt, der etwa mit dem Abschnitt der aktiven Oberfläche (5) des Wärmetauschergewölbes identisch ist, gegen die sie sich frontal derart richtet, dass die Wärmevorgeschichte, die alle Elemente, die Decke bilden, vor ihrer Verbrennung erfahren haben, identisch ist.

4. Brenner nach den Ansprüchen 2 und 3, **dadurch gekennzeichnet, dass** die Trennwände (1) des Wärmetauschergewölbes, die rigorosen Temperaturbedingungen unterworfen sind, aus feuerfesten keramischen Oxiden bestehen, die eine gute Feuerfestigkeit und chemische Beständigkeit, einen geringen Ausdehnungskoeffizienten und eine gute Widerstandsfähigkeit gegenüber thermischen Schocks besitzen, zu denen an erster Stelle Tonerde gehört.
